# EUROPEAN PATENT SPECIFICATION

(11) **EP 4 212 420 B1**
(45) Date of publication and mention of the grant of the patent: **05.02.2025**
(21) Application number: 22212217.8
(22) Date of filing: 08.12.2022
(51) Int. Cl.: B62J 9/16, B62J 43/20, B62J 43/30

(54) **STRADDLED VEHICLE WITH A WATERPROOF STRUCTURE**
GRÄTSCHSITZFAHRZEUG MIT EINER WASSERDICHTEN STRUKTUR
VÉHICULE À ENFOURCHER AVEC UNE STRUCTURE ÉTANCHE À L'EAU

(30) Priority: 14.01.2022 JP 2022004678
(43) Date of publication of application: 19.07.2023
(73) Proprietor: Yamaha Hatsudoki Kabushiki Kaisha, Iwata-shi, Shizuoka 438-8501 (JP)
(72) Inventor: Shimizu, Kenta, Iwata-shi, Shizuoka (JP); Fujiwara, Yu, Iwata-shi, Shizuoka (JP)
(74) Representative: Grünecker Patent- und Rechtsanwälte PartG mbB

(56) References cited:
- EP-A2- 2 280 436
- CN-C- 1 071 228
- JP-A- 2001 114 153
- JP-A- 2010 228 661
- JP-A- H04 331 683

## Description

The present invention relates to a waterproof structure for a straddled vehicle and a straddled vehicle including the waterproof structure.

A conventional straddled vehicles includes a waterproof structure for waterproofing an electrical component. For example, the waterproof structure for a motorcycle, which is disclosed in JP 5 650 600 B2, includes a waterproof container and a lower cover. The waterproof container covers the top, front, the rear, and the sides of the electrical component. Side walls of the waterproof container surrounds the sides of the electrical component. The lower cover covers a lower opening portion of the waterproof container. Side walls of the lower cover surrounds the sides of the watertight container.
JP 2001 / 114 153 A discloses a battery cooling structure for an electric motor vehicle in which a battery module formed by connecting plural cylindrical batteries which is disposed in a battery box, a passage is formed so that cooling air introduced into the battery box flows in the periphery of the side parts of the battery module.
CN 1 071 228 C, which discloses the preamble of claim 1, describes a small motorcycle with a footrest as a lower position in front of the seat. The footrest has a through hole with an electrical box and cover covering the through hole. The through hole has a surrounding groove along the periphery of the side wall of the through hole. CN 1 071 228 C discloses also that the surrounding groove receives a peripheral wall of the cover. The front side of the surrounding groove has locking holes which receive lugs of the peripheral wall of the front side of the cover.
JP 2010 / 228 661 A relates to a battery mounting structure for an electric two-wheeled vehicle. A battery case that includes a bottomed box-shaped case body and a lid. The lid covers an upper opening of the case body. The case body, an outer wall of the groove and connecting portion are the parts of the lower cover. The upper cover has the lid and a wall of fitting part. The fitting part fit together with the groove to prevent water from entering the case body.
JP H04 331 683 A relates to a battery box mounting structure for disposing a battery box below a storage box in a scooter type motorcycle. JP H04 331 683 A discloses an upper cover with a lid portion as well as surrounding wall portion. Moreover, a lower cover with a battery box, wall portion and connecting portion. The surrounding wall portion surrounds the wall portion, so that the battery box has a labyrinth shape around its periphery.
EP 2 280 436 A2 discloses a case which has a first case and a second case. The first case has inner walls and the second case has connecting grooves. When the first case and the second case are connected together, the inner walls are inserted into the connecting grooves. When the first case and the second case are connected, an interval exists between the inner walls and the connecting grooves.

In the conventional waterproof structure described above, if water enters between the side wall of the waterproof container and the side wall of the lower cover, the electrical component may get wet. Specifically, in a state where the water enters between the side wall of the waterproof container and the side wall of the lower cover, when the motorcycle is running or the motorcycle receives vibration at a rest state of the motorcycle, a water dynamic pressure acts on the water. The dynamic pressure may cause the water between the sidewalls of the waterproof container and the sidewalls of the lower cover to enter an internal space of the waterproof container. Thus, the electrical component, which is disposed in the waterproof container, may get wet in the conventional waterproof structure.

It is the object of the present invention to provide a straddled vehicle comprising a combination of a waterproof structure for a straddled vehicle and an electrical component that can suitably waterproof an electrical component of the straddled vehicle. According to the present invention said object is solved by a straddled vehicle comprising the features of independent claim 1. Preferred embodiments are laid down in the dependent claims.

A waterproof structure for a straddled vehicle according to one aspect is a waterproof structure for a straddled vehicle which mounts an electrical component. The waterproof structure for the straddled vehicle includes a lower cover and an upper cover. The lower cover includes an electrical component housing, a first wall portion, and a connecting portion. The electrical component housing covers the front, the rear, the sides and the bottom of the electrical component. The first wall portion surrounds the front, the rear and the sides of the electrical component housing. The connecting portion connects a lower end of the first wall portion and the electrical component housing.

The upper cover includes a lid portion and a second wall portion. The lid portion covers an upper opening end of the electrical component housing. The second wall portion extends from the lid portion toward the connecting portion. The second wall portion covers the front, the rear and the sides of the electrical component housing. The second wall portion is disposed at intervals from the electrical component housing and the first wall portion between the electrical component housing and the first wall portion. A gap is formed between a tip of the second wall portion and the connecting portion.

In the waterproof structure for the straddled vehicle according to this aspect, the second wall portion of the upper cover is disposed between the electrical component housing of the lower cover and the first wall portion of the lower cover. The second wall portion of the upper cover is disposed at an interval from the electrical component housing of the lower cover. The second wall of the upper cover is disposed at an interval from the first wall portion of the lower cover.

In this configuration, a space is formed not only between the second wall portion of the upper cover and the first wall portion of the lower cover, but also between the second wall portion of the upper cover and the electrical component housing of the lower cover. In other words, a labyrinth structure is formed by the space between the second wall portion of the upper cover and the first wall portion of the lower cover, the space between the second wall portion of the upper cover and the electrical component housing of the lower cover and the gap between the tip of the second wall portion and the connecting portion.

Therefore, even if water enters the space between the second wall portion of the upper cover and the first wall portion of the lower cover, the intrusion of water into an internal space of the electrical component housing is prevented by the space between the second wall portion of the upper cover and the electrical component housing of the lower cover. Thus, the waterproof structure of the straddled vehicle can suitably waterproof the electrical component of the straddled vehicle in comparison with the conventional technology.

The tip of the second wall portion can be disposed on an upper side of a position which is defined at half of height of the electrical component with respect to a bottom surface of the electrical component housing. Thereby, the upper cover can be easily attached to and detached from the lower cover.

The upper opening end of the electrical component housing can be disposed on an upper side of a position which is defined at half of height of the electrical component with respect to a bottom surface of the electrical component housing. Thereby, the electrical component can be suitably waterproofed.

The upper opening end of the electrical component housing can be disposed on an upper side of an upper surface of the electrical component. Thereby, the electrical component can be more suitably waterproofed.

The straddled vehicle can includes a center axis extending in a front-rear direction of the straddled vehicle in a vehicle upper view. The electrical component can include a connection terminal to which a transmission line is connected. The connecting portion can include a hole portion through which the transmission line passes. In this case, the hole portion is disposed on one of a left side and a right side with respect to the center axis. The connection terminal is disposed on the other of the left side and the right side.

For example, when the straddled vehicle is held by a stand thereof, a posture of the straddled vehicle changes from an upright state to an inclined state. In this case, the hole portion and the connection terminal are respectively provided on the connecting portion and the electrical component so that a height position of the hole portion moves upward and a height position of the connection terminal moves downward. Thereby, adhesion of water to the connection terminal can be suitably prevented. As a result, occurrence of rust on the connection terminal can be suppressed and contact failure of the connection terminal can be suitably prevented.

The connecting portion of the lower cover can include a drain hole. Thereby, even if water enters the connecting portion, the water can be discharged through the drain hole.

The electrical component can include a battery. In this case, the battery can be suitably waterproofed by the above configuration.

A straddled vehicle according to one aspect includes the above waterproof structure. Since the straddled vehicle according to this aspect includes the above waterproof structure, the electrical component can be suitably waterproofed in comparison with the conventional technology.

The straddled vehicle includes a seat and a footboard disposed in front of the seat and below the seat. In this case, the waterproof structure is disposed below the footboard. With this configuration, the electrical components can be suitably waterproofed when the waterproof structure is disposed below the footboard.

According to the present invention, a waterproof structure for a straddled vehicle can suitably waterproof an electrical component of the straddled vehicle.

### BRIEF DESCRIPTION OF THE DRAWINGS

FIG. 1 is a side view of a straddled vehicle.
FIG. 2 is a top view of the straddled vehicle.
FIG. 3 is a top view of a footboard.
FIG. 4 is a top view of a waterproof structure in a state where a maintenance cover and the upper cover is removed from the footboard.
FIG. 5 is a longitudinal cross-sectional view of the waterproof structure.
FIG. 6 is a horizontal cross-sectional view of the waterproof structure.
FIG. 7 is a lateral cross-sectional view of the waterproof structure.
FIG. 8 is a top view of a waterproof structure in a state where a maintenance cover is removed from the footboard.

### DETAILED DESCRIPTION OF PREFERRED EMBODIMENTS

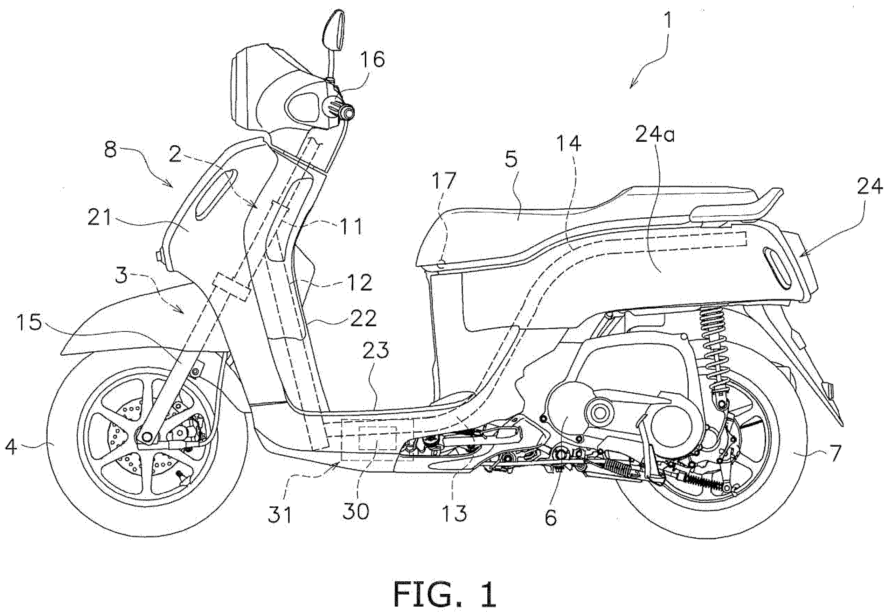

A straddled vehicle 1 according to an embodiment will be described below with reference to the drawings. FIG. 1 is a side view of a straddled vehicle 1. In this embodiment, the straddled vehicle 1 is a scooter. As shown in FIG. 1, the straddled vehicle 1 includes a vehicle body frame 2, a steering device 3, a front wheel 4, a seat 5, a power unit 6, a rear wheel 7 and a vehicle body cover 8. The straddled vehicle 1 further includes an electrical component 30 and a waterproof structure 31 for waterproofing the electrical component 30.

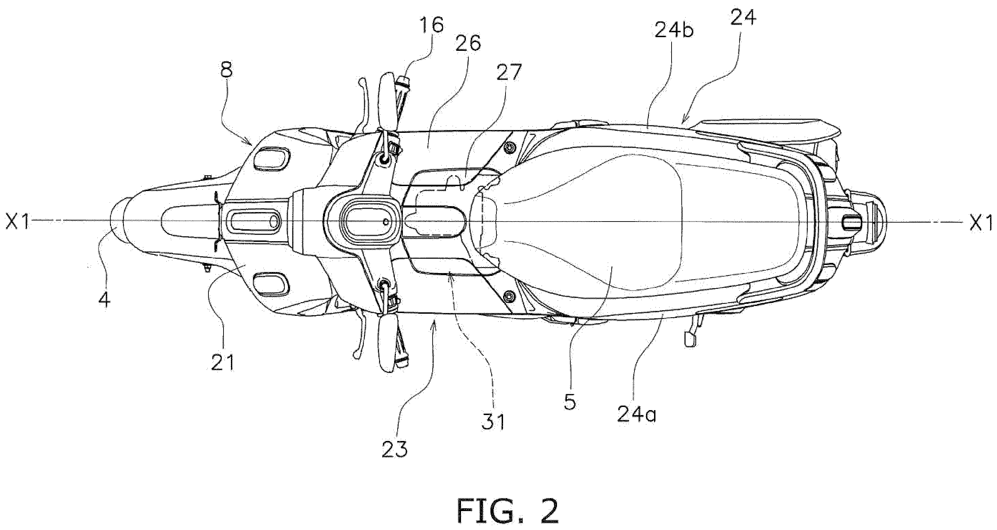

In the following description, the front, rear, left, and right directions corresponds to directions in which the driver views in a state where the driver is seated on the seat 5. For example, as shown in FIG. 2, a center axis X1 is defined on the straddled vehicle in a vehicle upper view when the straddled vehicle 1 is viewed from above. A direction, in which the center axis X1 extends in the vehicle upper view, is a front-rear direction. A direction, which is orthogonal to the center axis X1 in the vehicle upper view, is a left-right direction. The left-right direction is wording corresponding to a side direction. A direction, which is orthogonal to the front-rear direction and the left-right direction is an up-down direction.

As shown in FIG. 1, the vehicle body frame 2 includes a head pipe 11, a down frame 12, a pair of lower frames 13, and a seat frame 14. The head pipe 11 is disposed in a center of the straddled vehicle 1 in the left-right direction. For example, the head pipe 11 is disposed on the center axis X1 shown in FIG. 2. The head pipe 11 extends forward and downward.

The down frame 12 extends downward from head pipe 11. The pair of lower frames 13 extend rearward from a lower portion of the down frame 12. The pair of lower frames 13 are disposed at an interval from each other in the left-right direction. The seat frame 14 extends rearward and upward from a rear portion of the lower frames 13.

The steering device 3 is rotatably supported by the head pipe 11. The steering device 3 rotatably supports the front wheel 4. The steering device 3 includes front forks 15 and a handle member 16. The front forks 15 are rotatably supported by the head pipe 11. The front wheel 4 is rotatably supported by the front forks 15. The handle member 16 is connected to the front forks 15.

The seat 5 is disposed behind the head pipe 11. The seat 5 is disposed above the seat frame 14. The seat 5 is supported by the seat frame 14 via stays (not shown). A front portion of the seat 5 is pivotably supported by a shaft 17 extending in the left-right direction. The rear portion of the seat 5 moves in the up-down direction by pivoting the seat 5 around the shaft 17.

The power unit 6 is disposed below the seat 5. The power unit 6 includes an engine. Power unit 6 can include an electric motor. The rear wheel 7 is rotatably supported by the power unit 6.

The vehicle body cover 8 includes a front cover 21, a leg shield 22, a footboard 23, and a rear cover 24. The front cover 21 and the leg shield 22 are disposed at a front portion of the straddled vehicle 1. The front cover 21 is disposed in front of the head pipe 11 and the down frame 12. The leg shield 22 is disposed behind the head pipe 11 and the down frame 12.

The rear cover 24 is disposed at the rear portion of the straddled vehicle 1. The rear cover 24 is disposed below the seat 5. The rear cover 24 is disposed above the power unit 6 and the rear wheel 7. The rear cover 24 includes a left side cover 24a and a right side cover 24b (see FIG. 2). The left side cover 24a and the right side cover 24b are respectively disposed at side portions of the straddled vehicle 1.

As shown in FIG. 1, footboard 23 is positioned between leg shield 22 and rear cover 24. The footboard 23 extends rearward from a lower end of leg shield 22. The footboard 23 is disposed in front of the seat 5 and below the seat 5. As shown in FIG. 2, the footboard 23 includes a footrest portion 26 and a maintenance cover 27. The footrest portion 26 is used as a driver's footrest.

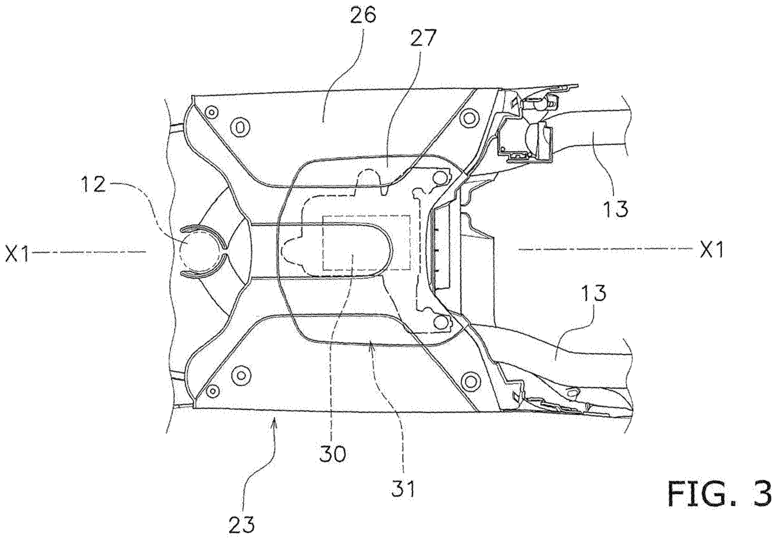

As shown in FIG. 3, the maintenance cover 27 covers the waterproof structure 31. The maintenance cover 27 is detachably mounted to the footrest portion 26. The maintenance cover 27 is used as a driver's footrest in a state where the maintenance cover 27 is mounted to the footrest portion 26. The driver can access the waterproof structure 31 in a state where the maintenance cover 27 removed from the footrest portion 26.

The maintenance cover 27 may be interpreted as a member that configures the waterproof structure 31. In this case, the waterproof structure 31 to be described later includes the maintenance cover 27.

As shown in FIG. 1, the electrical component 30 is mounted on the straddled vehicle 1. As shown in FIG. 3, the electrical component 30 is disposed below the footboard 23. For example, the electrical component 30 is disposed below the maintenance cover 27. Specifically, the electrical component 30 is disposed below the maintenance cover 27 in a state where the electrical component 30 is waterproofed by the waterproof structure 31.

The electrical component 30 includes a battery. An example, in which the electrical component 30 is a battery, is shown in this embodiment. The electrical component 30 can be a electrically functional component which is different from the battery as long as the electrical component 30 functions with electricity. The electrical component 30 can include both the battery and the electrically functional component.

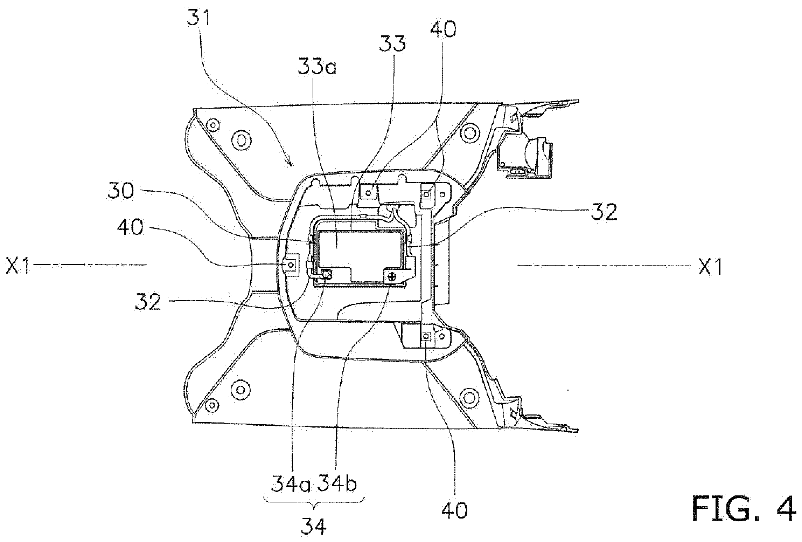

As shown in FIG. 4, the electrical component 30 includes at least one connection terminal 34 to which the transmission line 32 is connected. In this embodiment, the electrical component 30 includes a battery body 33 and two connection terminals 34. The two connection terminals 34 are provided on an upper surface 33a of the battery body 33.

The two connection terminals 34 are disposed on one of a left side and a right side with respect to the center axis X1. In this embodiment, the two connection terminals 34 are disposed on the left side. The two transmission lines 32 are respectively connected to the two connection terminals 34. The two connection terminals 34 include a plus terminal 34a and a minus terminal 34b.

As shown in FIG. 3, the waterproof structure 31 is disposed below the footboard 23. The waterproof structure 31 is disposed between the pair of lower frames 13. The waterproof structure 31 is provided on the footrest portion 26.

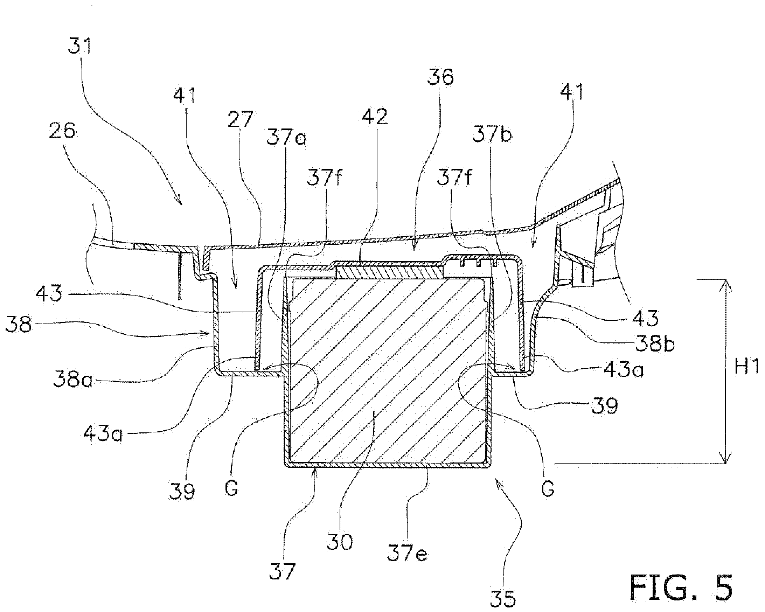

As shown in FIG. 5, the waterproof structure 31 includes a lower cover 35 and an upper cover 36. The lower cover 35 is disposed below the maintenance cover 27. The lower cover 35 is formed integrally with the footrest portion 26. The lower cover 35 can be formed separately from the footrest portion 26 and can be mounted to the footrest portion 26. The lower cover 35 includes an electrical component housing 37, a first surrounding wall portion 38 (an example of a first wall portion), and a connecting portion 39. As shown in FIG. 4, the lower cover 35 further includes a cover mounting portion 40.

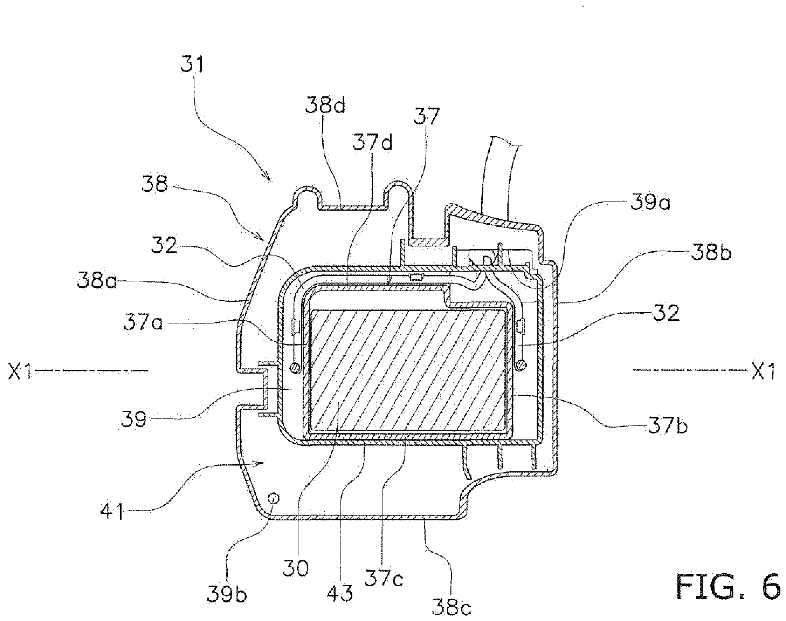

As shown in FIG. 5, the electrical component housing 37 houses the electrical component 30. As shown in FIG. 6, the electrical component housing 37 covers the front, the rear, the sides, and the bottom of the electrical component 30. The electrical component housing 37 includes a first front wall 37a, a first rear wall 37b, a first left wall 37c, a first right wall 37d, and a bottom portion 37e. The first front wall 37a covers the front of the electrical component 30. The first rear wall 37b covers the rear of the electrical component 30. The first left wall 37c covers the left side of the electrical component 30. The first right wall 37d covers the right side of the electrical component 30.

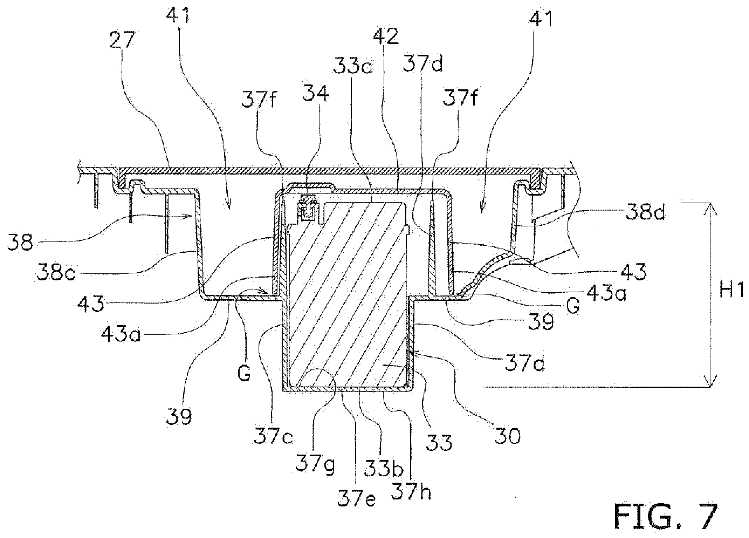

As shown in FIGS. 5 and 7, the bottom portion 37e covers the bottom of the electrical component 30. The bottom portion 37e is connected to a lower end of the first front wall 37a, a lower end of the first rear wall 37b, a lower end of the first left wall 37c, and a lower end of the first right wall 37d. The first front wall 37a, the first rear wall 37b, the first left wall 37c, the first right wall 37d, and the bottom portion 37e are integrally formed with each other.

As shown in FIG. 6, the first front wall 37a, the first rear wall 37b, the first left wall 37c, and the first right wall 37d form an outer wall of the electrical component housing 37. The outer walls 37a, 37b, 37c, 37d of the electrical component housing 37 surround the electrical component 30.

As shown in FIGS. 5 and 7, the bottom portion 37e forms the bottom portion of the electrical component housing 37. An upper end of the first front wall 37a, an upper end of the first rear wall 37b, an upper end of the first left wall 37c, and an upper end of the first right wall 37d form an upper opening end 37f of the electrical component housing 37.

Preferably, as shown in FIGS. 5 and 7, the upper opening end 37f of the electrical component housing 37 is disposed on an upper side of a position which is defined at half of height H1 of the electrical component 30 with respect to a bottom surface 37g of the electrical component housing 37. More preferably, the upper opening end 37f of the electrical component housing 37 is disposed on an upper side of a position which is defined at 2/3 of the height H1 of the electrical component 30 with respect to the bottom surface 37g of the electrical component housing 37.

In the present embodiment, as shown in FIG. 7, the upper opening end 37f of the electrical component housing 37 is disposed above the upper surface 33a of the battery body 33. The height H1 of electrical component 30 is defined by a maximum height of the electrical component 30. When the electrical component 30 includes multiple components, the height H1 of the electrical component 30 is defined by height of the tallest component among the multiple components.

When the height H1 of the electrical component 30 is defined, the connection terminals 34 are preferably excluded. For example, if the electrical component 30 is the battery, the height H1 of the electrical component 30 is preferably defined by a lower surface 33b of the battery body 33 and the upper surface 33a of the battery body 33.

As shown in FIG. 5, the first surrounding wall portion 38 is formed integrally with the footrest portion 26. As shown in FIG. 6, the first surrounding wall portion 38 surrounds the front, the rear, the left side, and the right side of the electrical component housing 37. For example, the first surrounding wall portion 38 surrounds the outer walls 37a, 37b, 37c, 37d of the electrical component housing 37. The first surrounding wall portion 38 includes a second front wall 38a, a second rear wall 38b, a second left wall 38c, and a second right wall 38d.

The second front wall 38a is disposed in front of the electrical component housing 37. For example, the second front wall 38a is disposed at an interval from the first front wall 37a of the electrical component housing 37 in front of the electrical component housing 37. The second rear wall 38b is disposed behind the electrical component housing 37. For example, the second rear wall 38b is disposed at an interval from the first rear wall 37b of the electrical component housing 37 behind the electrical component housing 37.

The second left wall 38c is disposed on the left side of the electrical component housing 37. For example, the second left wall 38c is disposed at an interval from the first left wall 37c of the electrical component housing 37 on the left side of the electrical component housing 37. The second right wall 38d is disposed on the right side of the electrical component housing 37. For example, the second right wall 38d is disposed at an interval from the first right wall 37d of the electrical component housing 37 on the right side of the electrical component housing 37.

As shown in FIGS. 5 and 7, the connecting portion 39 connects a lower end of the first surrounding wall portion 38 and the electrical component housing 37. For example, the connecting portion 39 is integrally formed with the lower end of the first surrounding wall portion 38 and the outer walls 37a, 37b, 37c, 37d of the electrical component housing 37. The connecting portion 39 extends from the lower end of the first surrounding wall portion 38 toward the outer walls 37a, 37b, 37c, 37d of the electrical component housing 37, and is connected to the outer walls 37a, 37b, 37c, 37d of the electrical component housing 37. A groove portion 41 is formed around the electrical component 30 by the outer walls 37a, 37b, 37c, 37d of the electrical component housing 37, the first surrounding wall portion 38 and the connecting portion 39.

As shown in FIG. 7, the connecting portion 39 is disposed above a lower surface 37h (an outer surface) of the bottom portion 37e of the electrical component housing 37. For example, the connecting portion 39 is disposed above the bottom surface 37g of the electrical component housing 37. Preferably, the connecting portion 39 is disposed on an upper side of a position which is defined at 1/3 of the height H1 of the electrical component 30 with respect to the bottom surface 37g of the electrical component housing 37. In this embodiment, the connecting portion 39 is disposed on a position which is defined at half of the height H1 of the electrical component 30 with respect to the bottom surface 37g of the electrical component housing 37. The arrangement position of the connecting portion 39 is defined by the upper surface of the connecting portion 39.

As shown in FIG. 6, the connecting portion 39 includes a wiring hole 39a (an example of a hole portion) and a drain hole 39b. The transmission line 32 is inserted through the wiring hole 39a. The wiring hole 39a penetrates the connecting portion 39. In other words, the wiring hole 39a penetrates the bottom portion 37e of the groove portion 41. The wiring hole 39a is disposed on the other of the left side and the right side with respect to the center axis X1. In this embodiment, the wiring hole 39a is disposed on the right side.

The drain hole 39b drains water which entered the groove portion 41. The drain hole 39b penetrates the bottom portion 37e of the groove portion 41. In other words, the drain hole 39b penetrates the connecting portion 39. In this embodiment, the drain hole 39b is disposed on the left side with respect to the center axis X1.

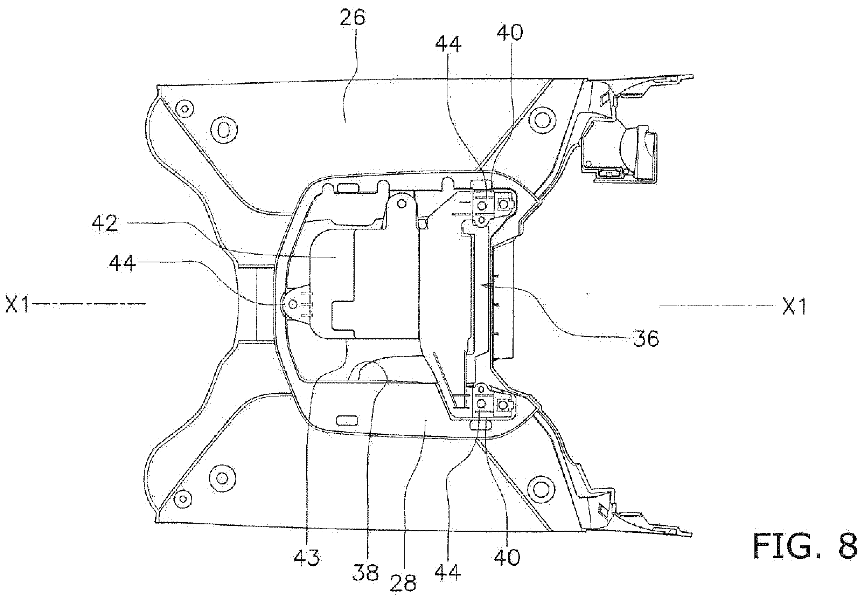

As shown in FIG. 8, the upper cover 36 is mounted to the cover mounting portion 40. The cover mounting portion 40 is provided between the first surrounding wall portion 38 and the footrest portion 26. For example, the cover mounting portion 40 is provided at a portion 28 which connects an upper end of the first surrounding wall portion 38 and the footrest portion 26. The portion 28 which connects the upper end of the first surrounding wall portion 38 and the footrest portion 26 can be interpreted as being included in the first surrounding wall portion 38.

As shown in FIGS. 5 and 7, the upper cover 36 is disposed below the maintenance cover 27. For example, the upper cover 36 is disposed between the maintenance cover 27 and the lower cover 35. The upper cover 36 includes a lid portion 42 and a second surrounding wall portion 43 (an example of a second wall portion). As shown in FIG. 8, the upper cover 36 further includes mounting arms 44.

As shown in FIGS. 5 and 7, the lid portion 42 covers the upper opening end 37f of the electrical component housing 37. The lid portion 42 is disposed between the maintenance cover 27 and the upper opening end 37f of the electrical component housing 37. The lid portion 42 is disposed at an interval from the upper opening end 37f of the electrical component housing 37.

The second surrounding wall portion 43 covers the front, the rear, the left, and the right of the electrical component housing 37. The second surrounding wall portion 43 is integrally formed with the lid portion 42. The second surrounding wall portion 43 extends from the lid portion 42 toward the connecting portion 39. A gap G is formed between a tip 43a of the second surrounding wall portion 43 and the connecting portion 39.

The second surrounding wall portion 43 overlaps the outer walls 37a, 37b, 37c, 37d of the electrical component housing 37 in a vehicle front view, a vehicle rear view, and a vehicle side view of the straddled vehicle 1. For example, the tip 43a of the second surrounding wall portion 43 is disposed below the upper opening end 37f of the electrical component housing 37. The tip 43a of the second surrounding wall portion 43 is disposed above the connecting portion 39.

The tip 43a of the second surrounding wall portion 43 is disposed above the bottom surface 37g of the electrical component housing 37. Preferably, the tip 43a of the second surrounding wall portion 43 is disposed on an upper side of a position which is defined at half of the height H1 of the electrical component 30 with respect to the bottom surface 37g of the electrical component housing 37.

As shown in FIGS. 5, 6, and 7, the second surrounding wall portion 43 is disposed between the electrical component housing 37 and the first surrounding wall portion 38. For example, the second surrounding wall portion 43 is disposed between the outer walls 37a, 37b, 37c, 37d of the electrical component housing 37 and the first surrounding wall portion 38.

Specifically, the second surrounding wall portion 43 is disposed at an interval from the outer walls 37a, 37b, 37c, 37d of the electrical component housing 37. As shown in FIG. The second surrounding wall portion 43 is disposed at an interval from the first surrounding wall portion 38.

More specifically, the second surrounding wall portion 43 is disposed at an interval from the outer walls 37a, 37b, 37c, 37d of the electrical component housing 37, the first surrounding wall portion 38, and the connecting portion 39, in a state where the second surrounding wall portion 43 is disposed in the above groove portion 41.

In other words, a labyrinth structure 41, 43 is formed by the second surrounding wall portion 43 and the groove portion 41 (the outer walls 37a, 37b, 37c, 37d of the electrical component housing 37, the first surrounding wall portion 38, and the connecting portion 39). The labyrinth structure 41, 43 prevents water which enters the groove portion 41 from entering an internal space of the electrical component housing 37.

As shown in FIG. 8, the mounting arm 44 is provided on the lid portion 42. For example, the mounting arm 44 is integrally formed with the lid portion 42. The mounting arm 44 can be formed separately from the lid portion 42 and can be mounted to the lid portion 42. The mounting arm 44 is detachably mounted to the cover mounting portion 40.

An air layer is formed in an internal space of the upper cover 36 in a state where the mounting arm 44 is mounted on the cover mounting portion 40. This air layer prevents water which enters the groove portion 41 from entering the internal space of the electrical component housing 37.

In the straddled vehicle 1 according to this embodiment, the first surrounding wall portion 38 of the lower cover 35 and the second surrounding wall portion 43 of the upper cover 36 are disposed at intervals from each other. The second surrounding wall portion 43 of the upper cover 36 and the outer walls 37a, 37b, 37c, 37d of the electrical component housing 37 of the lower cover 35 are disposed at intervals from each other. The gap G is formed between the tip 43a of the second surrounding wall portion 43 and the connecting portion 39.

In other words, the labyrinth structure 41, 43 is formed by the space between the first surrounding wall portion 38 of the lower cover 35 and the second surrounding wall portion 43 of the upper cover 36, the space between the second surrounding wall portion 43 of the upper cover 36 and the outer walls 37a, 37b, 37c, 37d of the electrical component housing 37 of the lower cover 35, and the gap G between the tip 43a of the second surrounding wall portion 43 and the connecting portion 39.

Thereby, even if water enters the space between the first surrounding wall portion 38 of the lower cover 35 and the second surrounding wall portion 43 of the upper cover 36, the intrusion of water into the internal space of the electrical component housing 37 is reliably prevented by the labyrinth structure 41, 43 and the air layer provided inside the upper cover 36. Thus, the waterproof structure 31 of the straddled vehicle 1 can suitably waterproof the electrical component 30 of the straddled vehicle 1 in comparison with the conventional technology.

The straddled vehicle 1 is not limited to a scooter and may be another type of straddled vehicle such as a moped.

The waterproof structure 31 is not limited to configuration of the above embodiment and can be modified. For example, the position of the tip 43a of the second surrounding wall portion 43 in the up-down direction and/or the position of the connecting portion 39 in the up-down direction can be changed within a range that satisfies configuration of the above embodiment.

The present invention is a straddled vehicle according to the appended claims.

### REFERENCE SIGNS LIST

1 a straddled vehicle
5 a seat
23 a footboard
30 an electrical component
31 a waterproof structure
32 a transmission line
33a an upper surface of an electrical component
34, 34a, 34b a connection terminal
35 a lower cover
36 an upper cover
37 an electrical component housing
37f an upper opening end of an electrical component housing
37g a bottom surface of an electrical component housing
38 a first surrounding wall portion
39 a connecting portion
39a a wiring hole
39b a drain hole
42 a lid portion
43 a second surrounding wall portion
G a gap
H1 height of an electrical component
X1 a center axis of a straddled vehicle

## Claims

1. A straddled vehicle (1) comprising a waterproof structure (31) and an electrical component (30) mounted in said structure, wherein
the straddled vehicle (1) includes a center axis (X1) extending in a front-rear direction of the straddled vehicle (1) in a vehicle upper view;
the electrical component (30) includes a connection terminal (34) to which a transmission line (32) is connected;
the waterproof structure (31) includes a hole portion (39a) through which the transmission line (32) passes;
the hole portion (39a) is disposed on one of a left side and a right side with respect to the center axis (X1); and
wherein the waterproof structure (31) further comprises:
a lower cover (35) including an electrical component housing (37) covering the front, the rear, the sides and the bottom of the electrical component (30), a first surrounding wall portion (38) surrounding the front, the rear and the sides of the electrical component housing (37), and a connecting portion (39) connecting a lower end of the first surrounding wall portion (38) and the electrical component housing (37); and
an upper cover (36) including a lid portion (42) covering an upper opening end (37f) of the electrical component housing (37) and a second surrounding wall portion (43) extending from the lid portion (42) toward the connecting portion (39) and covering the front, the rear and the sides of the electrical component housing (37);
the second surrounding wall portion (43) is disposed at intervals from the electrical component housing (37) and the first surrounding wall portion (38) between the electrical component housing (37) and the first surrounding wall portion (38); and
a gap (G) is formed between a tip (43a) of the second surrounding wall portion (43) and the connecting portion (39), wherein
the connecting portion (39) of the lower cover (35) includes a drain hole (39b), **characterized in that**
the connecting portion (39) includes the hole portion (39a), and
the connection terminal (34) is disposed on the other of the left side and the right side.

2. The straddled vehicle (1) according to claim 1, wherein
the tip (43a) of the second surrounding wall portion (43) is disposed on an upper side of a position which is defined at half of height (H1) of the electrical component (30) with respect to a bottom surface (37g) of the electrical component housing (37).

3. The straddled vehicle (1) according to claim 1 or 2, wherein
the upper opening end (37f) of the electrical component housing (37) is disposed on an upper side of a position which is defined at half of height (H1) of the electrical component (30) with respect to a bottom surface (37g) of the electrical component housing (37g).

4. The straddled vehicle (1) according to claim 3, wherein
the upper opening end (37f) of the electrical component housing (37) is disposed on an upper side of an upper surface (33a) of the electrical component (30).

5. The straddled vehicle (1) according to any one of claims 1 to 5, wherein
the electrical component (30) includes a battery (33).

6. The straddled vehicle (1) according to claim 1, wherein
a seat (5);
a footboard (23) disposed in front of the seat (5) and below the seat (5);
the waterproof structure (31) is disposed below the footboard (23).

## Patentansprüche

1. Ein Grätschsitzfahrzeug (1), das eine wasserdichte Struktur (31) und eine in der Struktur angebrachte elektrische Komponente (30) aufweist, wobei
das Grätschsitzfahrzeug (1) eine Mittelachse (X1) aufweist, die sich in einer Ansicht von oben auf das Grätschsitzfahrzeug (1) in einer Richtung von vorne nach hinten erstreckt;
die elektrische Komponente (30) einen Verbindungsanschluss (34) aufweist, mit dem eine Übertragungsleitung (32) verbunden ist;
die wasserdichte Struktur (31) einen Lochabschnitt (39a) aufweist, durch den die Übertragungsleitung (32) verläuft;
der Lochabschnitt (39a) auf einer linken oder rechten Seite in Bezug auf die Mittelachse (X1) angeordnet ist; und
wobei die wasserdichte Struktur (31) weiter aufweist:
eine untere Abdeckung (35), die ein elektrisches Komponentengehäuse (37) hat, das die Vorderseite, die Rückseite, die Seiten und den Boden der elektrischen Komponente (30) abdeckt, einen ersten umgebenden Wandabschnitt (38), der die Vorderseite, die Rückseite und die Seiten des elektrischen Komponentengehäuses (37) umgibt, und einen Verbindungsabschnitt (39), der ein unteres Ende des ersten umgebenden Wandabschnitts (38) und das elektrische Komponentengehäuse (37) verbindet; und
eine obere Abdeckung (36) mit einem Deckelabschnitt (42), der ein oberes Öffnungsende (37f) des elektrischen Komponentengehäuses (37) abdeckt, und einem zweiten umgebenden Wandabschnitt (43), der sich von dem Deckelabschnitt (42) zu dem Verbindungsabschnitt (39) erstreckt und die Vorderseite, die Rückseite und die Seiten des elektrischen Komponentengehäuses (37) abdeckt;
der zweite umgebende Wandabschnitt (43) in Abständen von dem elektrischen Komponentengehäuse (37) und dem ersten umgebenden Wandabschnitt (38) zwischen dem elektrischen Komponentengehäuse (37) und dem ersten umgebenden Wandabschnitt (38) angeordnet ist; und
ein Spalt (G) zwischen einer Spitze (43a) des zweiten umgebenden Wandabschnitts (43) und dem Verbindungsabschnitt (39) ausgebildet ist, wobei
der Verbindungsabschnitt (39) der unteren Abdeckung (35) ein Ablaufloch (39b) aufweist, **dadurch gekennzeichnet, dass** der Verbindungsabschnitt (39) den Lochabschnitt (39a) beinhaltet und der Verbindungsanschluss (34) auf der anderen Seite der linken Seite und der rechten Seite angeordnet ist.

2. Das Grätschsitzfahrzeug (1) gemäß Anspruch 1, wobei
die Spitze (43a) des zweiten umgebenden Wandabschnitts (43) an einer Oberseite einer Position angeordnet ist, die auf halber Höhe (H1) der elektrischen Komponente (30) in Bezug auf eine Bodenfläche (37g) des elektrischen Komponentengehäuses (37) definiert ist.

3. Das Grätschsitzfahrzeug (1) gemäß Anspruch 1 oder 2, wobei
das obere Öffnungsende (37f) des elektrischen Komponentengehäuses (37) an einer Oberseite einer Position angeordnet ist, die auf halber Höhe (H1) der elektrischen Komponente (30) in Bezug auf eine Bodenfläche (37g) des elektrischen Komponentengehäuses (37g) definiert ist.

4. Das Grätschsitzfahrzeug (1) gemäß Anspruch 3, wobei
das obere Öffnungsende (37f) des elektrischen Komponentengehäuses (37) auf einer Oberseite einer oberen Fläche (33a) der elektrischen Komponente (30) angeordnet ist.

5. Das Grätschsitzfahrzeug (1) gemäß einem der Ansprüche 1 bis 5, wobei
die elektrische Komponente (30) eine Batterie (33) aufweist.

6. Das Grätschsitzfahrzeug (1) gemäß Anspruch 1, wobei
ein Sitz (5);
ein Trittbrett (23), das vor dem Sitz (5) und unter dem Sitz (5) angeordnet ist;
die wasserdichte Struktur (31) unter dem Trittbrett (23) angeordnet ist.

## Revendications

1. Véhicule à enfourcher (1) comprenant une structure étanche à l'eau (31) et un composant électrique (30) monté dans ladite structure, dans lequel
le véhicule à enfourcher (1) comprend un axe central (X1) s'étendant dans une direction avant-arrière du véhicule à enfourcher (1) dans une vue supérieure du véhicule ;
le composant électrique (30) comprend une borne de connexion (34) à laquelle une ligne de transmission (32) est connectée ;
la structure étanche à l'eau (31) comprend une portion de trou (39a) à travers laquelle passe la ligne de transmission (32) ;
la portion de trou (39a) est disposée sur un côté parmi un côté gauche et un côté droit par rapport à l'axe central (X1) ; et
dans lequel la structure étanche à l'eau (31) comprend en outre :
un carénage inférieur (35) comprenant un boîtier de composant électrique (37) recouvrant l'avant, l'arrière, les côtés et le fond du composant électrique (30), une première portion de paroi environnante (38) entourant l'avant, l'arrière et les côtés du boîtier de composant électrique (37), et une portion de connexion (39) connectant une extrémité inférieure de la première portion de paroi environnante (38) et le boîtier de composant électrique (37) ; et
un carénage supérieur (36) comprenant une portion de couvercle (42) recouvrant une extrémité d'ouverture supérieure (37f) du boîtier de composant électrique (37) et une deuxième portion de paroi environnante (43) s'étendant depuis la portion de couvercle (42) vers la portion de connexion (39) et recouvrant l'avant, l'arrière et les côtés du boîtier de composant électrique (37) ;
la deuxième portion de paroi environnante (43) est disposée à intervalles du boîtier de composant électrique (37) et de la première portion de paroi environnante (38) entre le boîtier de composant électrique (37) et la première portion de paroi environnante (38) ; et
un espace (G) est formé entre une pointe (43a) de la deuxième portion de paroi environnante (43) et la portion de connexion (39),
dans lequel la portion de connexion (39) du carénage inférieur (35) comprend un trou de drainage (39b),
**caractérisé en ce que**
la portion de connexion (39) comprend la portion de trou (39a), et
la borne de connexion (34) est disposée de l'autre côté parmi le côté gauche et le côté droit.

2. Véhicule à enfourcher (1) selon la revendication 1, dans lequel
la pointe (43a) de la deuxième portion de paroi environnante (43) est disposée sur un côté supérieur d'une position qui est définie à la moitié de la hauteur (H1) du composant électrique (30) par rapport à une surface de fond (37g) du boîtier du composant électrique (37).

3. Véhicule à enfourcher (1) selon la revendication 1 ou 2, dans lequel
l'extrémité d'ouverture supérieure (37f) du boîtier de composant électrique (37) est disposée sur un côté supérieur d'une position qui est définie à la moitié de la hauteur (H1) du composant électrique (30) par rapport à une surface de fond (37g) du boîtier de composant électrique (37) .

4. Véhicule à enfourcher (1) selon la revendication 3, dans lequel
l'extrémité d'ouverture supérieure (37f) du boîtier de composant électrique (37) est disposée sur un côté supérieur d'une surface supérieure (33a) du composant électrique (30).

5. Véhicule à enfourcher (1) selon l'une quelconque des revendications 1 à 5, dans lequel
le composant électrique (30) comprend une batterie (33) .

6. Véhicule à enfourcher (1) selon la revendication 1, comprenant
un siège (5) ;
un marchepied (23) disposé en avant du siège (5) et en dessous du siège (5) ;
la structure étanche à l'eau (31) étant disposée en dessous du marchepied (23).
